# EUROPÄISCHE PATENTSCHRIFT

(11) **EP 3 946 801 B1**
(45) Veröffentlichungstag und Bekanntmachung des Hinweises auf die Patenterteilung: **09.08.2023**
(21) Anmeldenummer: 20717637.1
(22) Anmeldetag: 06.04.2020
(51) Int. Cl.: B23K 26/064, B23K 26/073, B23K 35/30, B23K 26/06, B23K 26/242, B23K 26/26, B23K 26/322, B23K 101/18, B23K 101/34

(54) **VERFAHREN ZUM SCHMELZSCHWEISSEN EINES ODER MEHRERER STAHLBLECHE AUS PRESSHÄRTBAREM STAHL**
METHOD FOR THE FUSION WELDING OF ONE OR MORE STEEL SHEETS OF PRESS-HARDENABLE STEEL
PROCÉDÉ DE SOUDAGE PAR FUSION D'UNE OU PLUSIEURS TÔLES D'ACIER EN ACIER EMBOUTISSABLE À CHAUD

(30) Priorität: 04.04.2019 DE 102019108837
(43) Veröffentlichungstag der Anmeldung: 09.02.2022
(73) Patentinhaber: Baosteel Tailored Blanks GmbH, 47259 Duisburg (DE)
(72) Erfinder: VON DER HEYDT, Jana, 47051 Duisburg (DE); BOTH, Christian, 47059 Duisburg (DE); KESSLER, Michael, 50126 Bergheim (DE)
(74) Vertreter: Cohausz & Florack
(86) Internationale Anmeldenummer: PCT/EP2020/059776
(87) Internationale Veröffentlichungsnummer: WO 2020/201578

(56) Entgegenhaltungen:
- WO-A1-2014/131491
- DE-A1-102014 001 979
- DE-T5-112017 003 592

## Beschreibung

Die Erfindung betrifft ein Verfahren zum Schmelzschweißen eines oder mehrerer Stahlbleche aus presshärtbarem Stahl, vorzugsweise Mangan-Bor-Stahl, wobei das oder mindestens eines der Stahlbleche eine metallische Beschichtung aus Aluminium, z. B. eine Al-Si-Beschichtung aufweist, und wobei das Schmelzschweißen unter Zuführung von Zusatzmaterial in das ausschließlich mittels mindestens eines Laserstrahls erzeugte Schmelzbad erfolgt.

Maßgeschneiderte Platinen aus Stahlblech (sogenannte Tailored Blanks) werden im Automobilbau verwendet, um hohe Anforderungen an die Crashsicherheit bei möglichst geringem Karosseriegewicht zu erfüllen. Hierzu werden einzelne Platinen oder Bänder unterschiedlicher Werkstoffgüte und/oder Blechdicke im Stumpfstoß durch Laserschweißen zusammengefügt. Auf diese Weise können verschiedene Stellen eines Karosseriebauteils an unterschiedliche Belastungen angepasst werden. So können an Stellen mit hoher Belastung dickeres oder auch höherfestes Stahlblech und an den übrigen Stellen dünnere Bleche oder auch Bleche aus relativ weichen Tiefziehgüten eingesetzt werden. Durch solche maßgeschneiderten Blechplatinen werden zusätzliche Verstärkungsteile an der Karosserie überflüssig. Das spart Material und ermöglicht, das Gesamtgewicht der Karosserie zu reduzieren.

Im modernen Karosseriebau werden Bleche aus Mangan-Bor-Stahl verwendet, die beim Warmumformen mit rascher Abkühlung hohe Festigkeiten erreichen. Im Anlieferungszustand, d. h. vor dem Warmumformen, weisen Mangan-Bor-Stähle eine Zugfestigkeit von ca. 600 MPa und ein ferritisch-perlitisches Gefüge auf. Durch Presshärten, d. h. durch Erwärmen auf Austenitisierungstemperatur vor dem Umformen und anschließendes rasches Abkühlen während oder nach dem Umformen kann ein vollständig martensitisches Gefüge eingestellt werden, welche Zugfestigkeiten bis zu 2000 MPa aufweisen kann. Häufig werden derartige Bauteile aus sogenannten Tailor welded Blanks gefertigt; das heißt es erfolgt eine Verbindung zwischen verschiedenen anforderungsgerechten Blechdicken und/oder Werkstoffgüten, üblicherweise mittels Laserstrahlschweißen.

In dem Warmumformungs- und Härtungsprozess, in welchem die Tailor welded Blanks weiterverarbeitet werden, soll deren Schweißnaht in der Regel in demselben Maße gehärtet werden wie die Grundwerkstoffe der Stahlplatinen, aus denen die Tailor welded Blanks zusammengesetzt sind. Dies zu gewährleisten, kann zum Beispiel beim Verschweißen von Stahlplatinen unterschiedlicher Dicke, bei denen sich am Fügestoß ein relativ großer Dickensprung ergibt, große Herausforderungen an den Warmumformungsprozess stellen. Das Prozessfenster (Parameterfenster) für einen adäquaten Härtungsprozess ist dann relativ klein. Zudem ist der Härtungsprozess empfindlich und muss sehr genau eingestellt werden, was oftmals produktionstechnische Einschränkungen für den Anwender mit sich bringt.

Weiter eingeschränkt wird das Schmelzschweißen von warmumformbaren, presshärtbaren Stahlblechen durch eine Oberflächenbeschichtung aus Aluminium. Eine solche Beschichtung, z. B. eine Aluminium-Silizium-Beschichtung, wird üblicherweise vorgesehen, um eine Verzunderung der Werkstücke bei der Warmumformung zu vermeiden. Auf die Qualität von Schweißnähten wirkt sich diese Oberflächenbeschichtung jedoch sehr negativ aus. Denn durch das Schmelzschweißen der beschichteten Stahlbleche wird neben dem Grundwerkstoff auch die aluminiumhaltige Oberflächenbeschichtung aufgeschmolzen und dadurch Aluminium in die Schweißnaht eingebracht. Liegt der Aluminiumgehalt in der Schweißnaht zwischen 2 und 10 Gew.-%, kommt es zur Bildung von ferritischen Bereichen (Phasen), die zu einer Herabsetzung der Festigkeit der Schweißnaht führen. Die Festigkeit der Schweißnaht liegt in solchen Fällen unter der des Grundwerkstoffs, so dass mit einem Versagen des betreffenden Bauteils in der Schweißnaht zu rechnen ist, unabhängig von der gefügten Blechdickenkombination.

Um die Ferritbildung zu verhindern, wird nach dem Stand der Technik eine zumindest teilweise Entfernung der Oberflächenbeschichtung im Randbereich der aneinander zu schweißenden Blechkanten vor dem Schweißprozess mittels mechanischer Werkzeuge oder Laserstrahlabtragung durchgeführt (vgl. EP 2 007 545 B1). Für dieses teilweise Entfernen der Oberflächenbeschichtung ist jedoch ein zusätzlicher Prozessschritt erforderlich, der sowohl kosten- als auch zeitintensiv ist und somit die Wirtschaftlichkeit der Fertigung von Bauteilen der hier beschriebenen Art beeinträchtigt.

In der US 2008/0011720 A1 ist ein Laser-Lichtbogen-Hybridschweißverfahren beschrieben, bei dem Platinen aus Mangan-Bor-Stahl, die eine Aluminium enthaltende Oberflächenschicht aufweisen, im Stumpfstoß miteinander verbunden werden. Der Lichtbogen wird mittels einer Wolfram-Schweißelektrode erzeugt oder bildet sich bei Verwendung eines MIG-Schweißbrenners an der Spitze eines Zusatzdrahtes. Der Zusatzdraht kann Legierungselemente (z. B. Mn, Ni und Cu) enthalten, welche die Umwandlung des Stahls in ein austenitisches Gefüge induzieren und eine Aufrechterhaltung der austenitischen Umwandlung im Schmelzbad begünstigen. Mit diesem Hybridschweißverfahren soll erreicht werden, dass warmumformbare Platinen aus Mangan-Bor-Stahl, die mit einer Beschichtung auf Al-Si-Basis versehen sind, ohne vorherige Entfernung des Beschichtungsmaterials im Bereich der herzustellenden Schweißnaht verschweißt werden können, wobei aber dennoch sichergestellt sein soll, dass an den Stoßkanten der Platinen befindliches Aluminium nicht zu einer Herabsetzung der Zugfestigkeit des Bauteils in der Schweißnaht führt. Durch das Vorsehen eines elektrischen Lichtbogens hinter dem Laserstrahl sollen das Schmelzbad homogenisiert und dadurch örtliche Aluminiumkonzentrationen größer 1,2 Gew.-%, die ein ferritisches Gefüge erzeugen, eliminiert werden.

Dieses bekannte Hybridschweißverfahren ist hinsichtlich des Energieverbrauchs aufgrund der Erzeugung des elektrischen Lichtbogens relativ aufwendig. Ferner ist die Schweißgeschwindigkeit vergleichsweise niedrig. Zudem weist eine durch Laser-Lichtbogen-Hybridschweißen erzeugte Schweißnaht eine für die weitere Umformung ungünstige Nahtform auf, welche gegebenenfalls einer Nachbearbeitung bedarf.

Aus der EP 2 919 942 B1 ist ein Verfahren zum Laserstrahlschweißen von Blechen aus presshärtbarem Mangan-Bor-Stahl im Stumpfstoß unter Verwendung von Zusatzdraht bekannt, wobei der Zusatzdraht mindestens ein Legierungselement aus der Mangan, Chrom, Molybdän, Silizium und/oder Nickel umfassenden Gruppe enthält, das die Bildung von Austenit in dem mit dem Laserstrahl erzeugten Schmelzbad begünstigt, und wobei dieses mindestens eine Legierungselement mit einem um mindestens 0,1 Gew.-% größeren Massenanteil im Zusatzdraht vorhanden ist als in dem presshärtbaren Stahl der Stahlbleche. Der Zusatzdraht weist dabei folgende Zusammensetzung auf: 0,05 bis 0,15 Gew.-% C, 0,5 bis 2,0 Gew.-% Si, 1,0 bis 2,5 Gew.-% Mn, 0,5 bis 2,0 Gew.-% Cr + Mo, und 1,0 bis 4,0 Gew.-% Ni, Rest Eisen und unvermeidbare Verunreinigungen. Zudem hat der Zusatzdraht einen um mindestens 0,1 Gew.-% geringeren Kohlenstoff-Massenanteil als der presshärtbare Stahl der Stahlbleche. Das Verfahren ist außerdem dadurch gekennzeichnet, dass die verwendeten Stahlbleche unbeschichtet sind oder durch Abtragen ihrer Beschichtung im Randbereich entlang den miteinander zu verschweißenden Stoßkanten vor dem Schweißen teilentschichtet wurden.

In der EP 2 737 971 A1 wird ein Laserstrahlschweißverfahren zur Herstellung von Tailor welded Blanks aus beschichteten Stahlblechen unter Verwendung von Zusatzdraht beschrieben, wobei die Stahlbleche aus borlegiertem Stahl bestehen und eine Aluminium-Silizium- oder Zink-Beschichtung aufweisen. Der Zusatzdraht enthält Kohlenstoff oder Mangan, wobei der Massenanteil dieses Elements im Zusatzdraht größer ist als im Grundmaterial der beschichteten Stahlbleche. So soll der Kohlenstoffgehalt des Zusatzdrahtes 0,1 bis 0,8 Gew.-% und sein Mangangehalt 1,5 bis 7,0 Gew.-% höher liegen als derjenige des Grundmaterials der Stahlbleche. Hierdurch soll eine Verringerung der Festigkeit der Schweißnaht gegenüber den pressgehärteten Stahlblechen infolge des Eindringens von Beschichtungsmaterial in das durch den Laserstrahl erzeugte Schmelzbad vermieden werden.

Die EP 2 736 672 B1 offenbart ein Verfahren zur Herstellung eines Bauteils aus beschichteten Stahlblechen durch Laserstrahlschweißen unter Verwendung von Zusatzdraht, wobei die Stahlbleche eine Beschichtung auf Basis von Aluminium aufweisen, die in Randbereichen entlang der miteinander zu verschweißenden Stoßkanten vor dem Schweißen soweit abgetragen wurde, dass dort noch eine intermetallische Legierungsschicht verbleibt. Der Zusatzdraht weist dabei folgende Zusammensetzung auf: 0,6 bis 1,5 Gew.-% C, 1,0 bis 4,0 Gew.-% Mn, 0,1 bis 0,6 Gew.-% Si, max. 2,0 Gew.-% Cr, und max. 0,2 Gew.-% Ti, Rest Eisen und durch die Bearbeitung verursachte Verunreinigungen.

Die DE 10 2017 120 051 A1 offenbart ein Verfahren zum Laserstrahlschweißen von Stahlblechen aus presshärtbarem Mangan-Bor-Stahl, bei dem mindestens eines der Stahlbleche eine Beschichtung aus Aluminium aufweist. Das Laserstrahlschweißen erfolgt unter Zuführung von Zusatzdraht in das ausschließlich mittels eines Laserstrahls erzeugte Schmelzbad, wobei der Zusatzdraht mindestens ein Austenit stabilisierendes Legierungselement enthält. Um bei relativ geringem Energieverbrauch und hoher Produktivität zu erreichen, dass die Schweißnaht nach dem Presshärten eine dem Grundwerkstoff vergleichbare Festigkeit aufweist, wird der Laserstrahl derart in Oszillation versetzt, dass er quer zur Schweißrichtung oszilliert, wobei die Oszillationsfrequenz mindestens 200 Hz beträgt. Das Verfahren bietet Kostenvorteile, da bei ihm ein Abtragen der Aluminiumbeschichtung am Rand der zu verschweißenden Blechkanten entfallen kann. Die Oszillation des Laserstrahls reduziert jedoch die erzielbare Schweißgeschwindigkeit.

DE 10 2014 001979 A1 stellt den Oberbegriff von Anspruch 1 dar und offenbart ein Verfahren zum Laserschweißen von Stahlblechen mit einer Oberflächenbeschichtung aus Aluminium unter zu Hilfenahme eines Zusatzwerkstoffes. Hierbei wird versucht einen negativen Einfluss der Beschichtungselemente auf die Härtbarkeit der Schweißnaht durch eine Anpassung des Zusatzwerkstoffes an den verwendeten Stahl zu kompensieren.

Der vorliegenden Erfindung liegt die Aufgabe zugrunde, ein Verfahren der eingangs genannten Art anzugeben, mit dem Stahlbleche, von denen mindestens ein Blech aus presshärtbarem Stahl hergestellt ist und eine metallische Beschichtung aufweist, die Aluminium enthält, derart gefügt werden können, dass deren Schweißnaht nach dem Warmumformen (Presshärten) eine dem Grundwerkstoff vergleichbare Festigkeit und Härte aufweist, wobei sich das Verfahren durch eine hohe Produktivität sowie einen vergleichsweise geringen Energieverbrauch auszeichnen soll. Insbesondere soll ein Verfahren der eingangs genannten Art angegeben werden, durch das die Härtbarkeit der Schweißnaht verbessert wird, und dies unabhängig davon, ob es sich bei den miteinander zu verschweißenden Stahlblechen um Stahlbleche gleicher oder verschiedener Werkstoffgüte und/oder um Stahlbleche unterschiedlicher Blechdicke handelt. Des Weiteren soll der anlagentechnische Aufwand zur Umsetzung des Verfahrens relativ gering sein. Es soll also ein Verfahren der eingangs genannten Art geschaffen werden, mit dem Bleche aus presshärtbarem Stahl, die eine Beschichtung auf Basis von Aluminium aufweisen, auf wirtschaftliche Weise miteinander verschweißt werden können und mit dem die Härtbarkeit der Schweißnaht verbessert wird, so dass das Prozessfenster für einen adäquaten Härtungsprozess vergrößert wird. Insbesondere soll eine hohe Schweißgeschwindigkeit ermöglicht werden.

Zur Lösung zumindest einiger Teilaspekte dieser Aufgabe wird ein Verfahren mit den in Anspruch 1 angegebenen Merkmalen vorgeschlagen. Vorteilhafte Ausgestaltungen des erfindungsgemäßen Verfahrens sind in den Unteransprüchen aufgezeigt.

Die Erfindung sieht bei einem Laserstrahlschweißverfahren der eingangs genannten Art vor, dass mittels eines oder mehrerer optischer Elemente ein einzelner Laserbrennfleck mit unterschiedlicher Energieverteilung an dem Schmelzbad derart erzeugt wird, dass der Laserbrennfleck einen kleineren Laserbrennfleckbereich und einen größeren Laserbrennfleckbereich aufweist, wobei der größere Laserbrennfleckbereich eine Fläche bestrahlt, die mindestens das 2-fache, vorzugsweise mindestens das 3-fache einer von dem kleineren Laserbrennfleckbereich bestrahlten Fläche beträgt, und in dem kleineren Laserbrennfleckbereich eine höhere Laserenergieleistung pro Flächeneinheit als in dem größeren Laserbrennfleckbereich eingebracht wird.

Die beschriebene erfindungsgemäße Energieverteilung im Laserbrennfleck hat den Effekt, dass sich die Temperaturverteilung und somit die Strömungen im Schmelzbad gegenüber einer Temperaturverteilung und den Strömungen in einem mit einem herkömmlichen Laserschweißstrahl erzeugten Schmelzbad verändern. Der kleinere Laserbrennfleckbereich, der auch als Hauptbrennfleck bezeichnet werden kann und in welchem eine höhere Laserenergieleistung pro Flächeneinheit als in dem größeren Laserbrennfleckbereich (Nebenbrennfleck) eingebracht wird, dient im Wesentlichen der Tiefenverschweißung, während der größere Laserbrennfleckbereich den Schweißprozess unterstützt. Die über den kleineren Laserbrennfleckbereich eingebrachte Laserenergieleistung kann das gleiche oder in etwa das gleiche Niveau haben wie die über den größeren Laserbrennfleckbereich eingebrachte Laserenergieleistung. Beispielsweise können sowohl in den kleineren Laserbrennfleckbereich als auch in den größeren Laserbrennfleckbereich jeweils eine Laserenergieleistung von ca. 4,5 kW geleitet werden. Es liegt allerdings auch im Rahmen der Erfindung, dass die über den kleineren Laserbrennfleckbereich eingebrachte Laserenergieleistung ein deutlich unterschiedliches Niveau hat als die über den größeren Laserbrennfleckbereich eingebrachte Laserenergieleistung. Die in dem größeren Laserbrennfleckbereich eingebrachte Energie verteilt sich jeweils über eine größere Fläche als die in dem kleineren Laserbrennfleckbereich eingebrachte Energie. Die Wirkung der im größeren Laserbrennfleckbereich (Nebenbrennfleck) eingebrachten Energie unterscheidet sich somit von der Wirkung der Energie im Hauptbrennfleck. Durch diese unterschiedliche Energieeinbringung bzw. Energieverteilung lassen sich eine höhere Homogenisierung des Schmelzbades und damit eine hinsichtlich ihrer Härtbarkeit verbesserte Schweißnaht erzielen. Das Prozessfenster für einen adäquaten Härtungsprozess wird dadurch vergrößert.

Die Energieverteilung wird derart gesteuert, dass der kleinere Laserbrennfleckbereich (Hauptbrennfleck) einen Tiefenschweißprozess erzeugt, während die Energie des äußeren oder größeren Laserbrennfleckbereichs den energetischen Schwellbereich zum Tiefenschweißen nicht überschreitet. Der Schwellbereich liegt dabei beispielsweise bei einer Leistungsdichte von ca. 1000 kW/cm².

Das erfindungsgemäße Verfahren bietet insbesondere den Vorteil, dass bei ihm eine teilweise Entfernung der Aluminium enthaltenden Oberflächenbeschichtung im Randbereich der aneinander zu schweißenden Blechkanten vor dem Schweißprozess nicht notwendig ist. Dementsprechend sieht eine bevorzugte Ausgestaltung des erfindungsgemäßen Verfahrens vor, dass dieses im Wesentlichen ohne vorheriges Entfernen, insbesondere ohne vorheriges teilweises Entfernen der Aluminium enthaltenden Oberflächenbeschichtung vom Randbereich der aneinander zu schweißenden Blechkanten durchgeführt wird.

Im Vergleich zum Laserstrahlschweißen nach vorherigem Entschichten der Ränder der im Stumpfstoß zu verschweißenden beschichteten Stahlbleche ermöglicht das erfindungsgemäße Verfahren eine optimierte Schweißnahtgeometrie, und zwar einen größeren tragenden Blechkantenquerschnitt. Dies ist insbesondere bei späteren dynamischen Belastungen der Schweißnaht von Vorteil.

Ein weiterer Vorteil des erfindungsgemäßen Verfahrens besteht, wie sich bei internen Versuchen gezeigt hat, in der deutlich geringeren Schweißspritzerbildung. Ein Grund für die geringere Schweißspritzerbildung wird seitens der Erfinder in der gezielt unterschiedlichen Energieverteilung im Laserbrennfleck und der daraus resultierenden speziellen Schmelzbadströmung gesehen.

Die Laserstrahlenergie lässt sich weitgehend variabel in dem Laserbrennfleck verteilen. Die unterschiedliche Energieverteilung bzw. angepasste Energieeinbringung im Laserbrennfleck wird bei dem erfindungsgemäßen Verfahren mittels eines oder mehrerer optischer Elemente erreicht. Beispielsweise kann dies über ein oder mehrere diffraktorische oder refraktorische Optikelemente und/oder direkt durch die Verwendung einer oder mehrerer entsprechend angeordneter Lichtleiterfasern verwirklicht werden. Ein entsprechend modifizierter Laserschweißkopf kann beispielsweise zwei unterschiedliche diffraktorische oder refraktorische Optikelemente, insbesondere Linsen aufweisen, die relativ zueinander axial und/oder radial verschoben werden können. Ein entsprechend modifizierter Laserschweißkopf lässt sich in kompakter Bauweise realisieren.

Eine andere Möglichkeit zur Erzeugung einer unterschiedlichen Energieverteilung in dem einzelnen Laserbrennfleck besteht darin, den Laserstrahl zu teilen und die dadurch erhaltenen Laserteilstrahlen durch unterschiedliche diffraktorische oder refraktorische Optikelemente, insbesondere Linsen zu leiten, wobei die so modulierten Laserteilstrahlen anschließend wieder zu einem Laserstrahl zusammengeführt werden und der so zusammengesetzte Laserstrahl auf den Fügestoß der miteinander zu verschweißenden Stahlblechkanten gerichtet wird. Auch ein solcher modifizierter Laserschweißkopf lässt sich in kompakter Bauweise realisieren.

Noch eine weitere Möglichkeit zur Erzeugung einer unterschiedlichen Energieverteilung in dem einzelnen Laserbrennfleck besteht darin, zwei oder mehr unterschiedliche Laserstrahlen, die beispielsweise mittels ähnlicher oder unterschiedlicher Laserlichtquellen erzeugt werden, in einer Laserstrahloptik derart zusammenzuführen, dass der daraus resultierende Laserstrahl einen einzelnen, zusammengesetzten Laserbrennfleck mit unterschiedlicher Energieverteilung erzeugt.

Die Vorrichtung zur Führung des Laserschweißkopfes bzw. des jeweiligen zu verschweißenden Werkstücks kann dabei in den voranstehend angegebenen Ausgestaltungen der Erfindung jeweils in herkömmlicher Art ausgeführt werden, d. h. das erfindungsgemäße Verfahren erfordert keine aufwendigere mechanische Anordnung oder aufwendigere Führungsvorrichtung als dies bei herkömmlichen Laserschweißanlagen zur Ausführung eines gattungsgemäßen Verfahrens zum Schmelzschweißen eines oder mehrerer Stahlbleche aus presshärtbarem Stahl der Fall ist. Eine Anlage zum Laser-Lichtbogen-Hybridschweißen, wie es z. B. aus der US 2008/0011720 A1 bekannt ist, erfordert dagegen wegen des längeren Einwirkbereiches der Schweißvorrichtung eine relativ aufwendige mechanische Anordnung sowie Führung der Schweißvorrichtung oder des zu verschweißenden Werkstückes, insbesondere beim Schweißen entlang einer bogenförmigen Blechkantenkontur. Mit dem erfindungsgemäßen Verfahren lassen sich ein relativ kleines Schmelzbad und entsprechend feine Schweißnähte erzeugen. Das erfindungsgemäße Schweißverfahren zeichnet sich durch eine geringer Fehleranfälligkeit und eine hohe Prozessstabilität aus.

Des Weiteren ermöglicht das erfindungsgemäße Verfahren insbesondere im Vergleich zu einem Laser-Lichtbogen-Hybridschweißen hohe Schweißgeschwindigkeiten bei relativ geringem Energieverbrauch.

Eine vorteilhafte Ausgestaltung der Erfindung ist dadurch gekennzeichnet, dass der Laserstrahl bei dem Schmelzschweißen im Wesentlichen oszillationsfrei betrieben wird. Im Wesentlichen oszillationsfrei bedeutet, dass der Laserstrahl nicht gewollt in Oszillation versetzt wird. Hierdurch lassen sich insbesondere relativ hohe Schweißgeschwindigkeiten erreichen. Ferner kann somit die Lagerung des Laserschweißkopfes bzw. die Halterung der optischen Elemente im Laserschweißkopf relativ einfach verwirklicht werden.

Eine weitere vorteilhafte Ausgestaltung der Erfindung sieht vor, dass das oder die optischen Elemente, mittels dem/denen der eine unterschiedliche Energieverteilung aufweisende Laserbrennfleck erzeugt wird, derart ausgeführt ist/sind, dass die Position des kleineren Laserbrennfleckbereichs innerhalb des größeren Laserbrennfleckbereichs, relativ zu letzterem einstellbar ist. Somit kann die unterschiedliche Energieeinbringung bzw. unterschiedliche Energieverteilung in dem Laserbrennfleck optimal an die jeweiligen Schweißbedingungen angepasst werden. Beispielsweise wird die Position des kleineren Laserbrennfleckbereichs innerhalb des größeren Laserbrennfleckbereichs in einer parallel und/oder quer zur Schweißrichtung verlaufenden Richtung eingestellt. Vorzugsweise wird die Position des kleineren Laserbrennfleckbereichs innerhalb des größeren Laserbrennfleckbereichs so eingestellt, dass der kleinere Laserbrennfleckbereich im Wesentlichen in der Mitte des größeren Laserbrennfleckbereichs oder in Richtung der Schweißrichtung gesehen vorlaufend vor der Mitte des größeren Laserbrennfleckbereichs angeordnet ist.

Die Form des größeren Laserbrennfleckbereichs und/oder des kleineren Laserbrennfleckbereichs kann beispielsweise rund, elliptisch, quadratisch oder rechteckig sein. Eine im Wesentlichen runde Form des größeren Laserbrennfleckbereichs und/oder des kleineren Laserbrennfleckbereichs kann sich insbesondere dann ergeben, wenn bei dem erfindungsgemäßen Verfahren die unterschiedliche Energieverteilung bzw. angepasste Energieeinbringung im Laserbrennfleck mittels eines oder mehrerer entsprechend angeordneter Lichtleiterfasern verwirklicht wird.

Nach einer vorteilhaften Ausgestaltung der Erfindung weist der größere Laserbrennfleckbereich eine längliche Form, insbesondere eine ovale, elliptische oder rechteckige Form auf, wobei eine Längsachse des größeren Laserbrennfleckbereichs im Wesentlichen in der Schweißrichtung verläuft. Hierdurch ergibt sich am Fügestoß eine relativ große Schweißbadfläche, so dass bei einer bestimmten Schweißgeschwindigkeit mehr Zeit für ein Ausgasen des Schweißbades bis zur Erstarrung der Schweißnaht zur Verfügung steht.

Eine weitere vorteilhafte Ausgestaltung der Erfindung ist dadurch gekennzeichnet, dass der größere Laserbrennfleckbereich eine Längserstreckung aufweist, die mindestens das 2-fache, vorzugsweise mindestens das 2,5-fache, besonders bevorzugt mindestens das 3-fache des mittleren Durchmessers oder größten Durchmessers des kleineren Laserbrennfleckbereichs beträgt. Versuche seitens der Erfinder haben ergeben, dass sich auf diese Weise eine sehr homogene Verteilung von in das Schweißbad eingeflossenem und in der Schweißnaht verbleibendem Aluminium erzielen lässt.

Erfindungsgemäß erfolgt das Schmelzschweißen unter Zuführung von Zusatzmaterial (auch Schweißzusatz genannt) in das ausschließlich mittels mindestens eines Laserstrahls erzeugte Schmelzbad. Der Schweißzusatz hat mehrere Aufgaben. Zum einen kann durch geeignete Legierungselemente des Schweißzusatzes die ferritbildende Wirkung von aus der Beschichtung in die Schweißschmelze eingeflossenem Aluminium minimiert und somit die Härtbarkeit der Schweißnaht verbessert werden. Zum anderen wird durch die Zugabe von im Wesentlichen aluminiumfreien Zusatzmaterial der Aluminiumgehalt der Schweißnaht minimiert. Zudem kommt es zu vermehrten oder stärkeren Strömungsbewegungen im Schmelzbad durch das darin eingebrachte Zusatzmaterial und somit zu einer Homogenisierung der Schweißnahtzusammensetzung.

Zusatzmaterial wird dem Schmelzbad vorzugsweise in Form eines Drahtes oder Pulvers zugeführt. Zusatzmaterial in Form eines Drahtes lässt sich dem Schmelzbad sehr energieeffizient und mit hoher Mengengenauigkeit zuführen. Durch Einbringen von pulverförmigem Schweißzusatz einer geeigneten Partikelgröße ist ein sehr gleichmäßiges Vermischen des Schweißzusatzes im Schmelzbad möglich. Typischerweise liegt die Dauer der Schmelzphase beim Laserschweißen in einem Bereich von nur etwa 6 ms bis 125 ms. Da die Schweißzeit beim Laserschweißen relativ kurz ist, lässt sich mit pulverförmigem Schweißzusatz eine bessere Durchmischung mit dem zu verschweißenden Stahl erzielen als bei Verwendung von Zusatzdraht. Durch die Verwendung eines pulverförmigen Schweißzusatzes, der relativ kleine Partikel, vorzugsweise kleine Metallpartikel aufweist, kann eine weitgehend homogene Legierungsdurchmischung auch in sehr kurzen Zeiträumen der Schmelzphase erzielt werden. Die Partikel des pulverförmigen Schweißzusatzes haben beispielsweise eine Partikelgröße im Bereich von 20 µm bis 160 µm, vorzugsweise im Bereich von 20 µm bis 160 µm.

Vorzugsweise wird das pulverförmige Zusatzmaterial in Form eines Gas-Pulverstroms über mindestens einen Strömungskanal zugeführt, wobei der aus dem Strömungskanal austretende Gas-Pulverstrom auf das Schmelzbad gerichtet ist und eine Austrittsgeschwindigkeit von mindestens 2 m/s, vorzugsweise mindestens 10 m/s, besonders bevorzugte mindestens 15 m/s aufweist, so dass sich eine turbulente Durchmischung des Schweißzusatzes mit dem Schmelzbad ergibt, bei der sich im Schmelzbad Strömungswirbel ergeben. Diese Strömungswirbel (Turbulenzen) werden insbesondere durch die Kinetik des Gas-Pulverstroms bewirkt. Eine Obergrenze der Austrittsgeschwindigkeit des auf das Schmelzbad gerichteten Gas-Pulverstroms kann beispielsweise bei 50 m/s, insbesondere bei 40 m/s oder bei 30 m/s liegen.

Vorzugsweise ist das bei der Durchführung des erfindungsgemäßen Verfahrens dem Schmelzbad zugeführte Zusatzmaterial im Wesentlichen aluminiumfrei. Unter einem aluminiumfreien oder im Wesentlichen aluminiumfreien Zusatzmaterial wird im Kontext der Erfindung ein Schweißzusatz verstanden, der bis auf unvermeidbare Verunreinigungen oder unvermeidbare Spurenanteile kein Aluminium enthält.

Zur Verbesserung der Härtbarkeit der Schweißnaht sieht eine weitere Ausgestaltung der Erfindung vor, dass das Zusatzmaterial mindestens ein Legierungselement aus einer Nickel, Chrom und/oder Kohlenstoff umfassenden Gruppe enthält. Um die Härtbarkeit der Schweißnaht zu erhöhen, enthält das Zusatzmaterial vorzugsweise 5 bis 12 Gew.-% Ni, 5 bis 25 Gew.-% Cr und 0,05 bis 0,4 Gew.-% C, optional mindestens ein weiteres Legierungselement, Rest Eisen und unvermeidbare Verunreinigungen. Ein Chromgehalt des Zusatzmaterials im Bereich von 5 bis 25 Gew.-% ist günstig, um die kritische Abkühlgeschwindigkeit der Schweißnaht herabzusetzen und somit die Härtbarkeit der Schweißnaht weiter zu verbessern.

Eine bevorzugte Ausgestaltung des erfindungsgemäßen Verfahrens ist dadurch gekennzeichnet, dass das dabei verwendete Zusatzmaterial folgende Zusammensetzung aufweist: 0,05 bis 0,4 Gew.-% C, 0 bis 2,0 Gew.-% Si, 0 bis 3,0 Gew.-% Mn, 4 bis 25 Gew.-% Cr, 0 bis 0,5 Gew.-% Mo, und 5 bis 12 Gew.-% Ni, Rest Fe und unvermeidbare Verunreinigungen. Interne Versuche haben ergeben, dass sich mit einem solchen Zusatzmaterial unter Anwendung des erfindungsgemäßen Verfahrens sehr zuverlässig eine vollständige Umwandlung der Schweißnaht in ein martensitisches Gefüge beim anschließenden Warmumformen (Presshärten) des Tailored Blanks sicherstellen lässt.

Eine weitere vorteilhafte Ausgestaltung des erfindungsgemäßen Verfahrens ist dadurch gekennzeichnet, dass das Zusatzmaterial, vorzugsweise in Form eines Drahtes, derart in das Schmelzbad zugeführt wird, dass das Zusatzmaterial unmittelbar in den kleineren Laserbrennfleckbereich zugeführt wird. Das Zusatzmaterial, vorzugsweise in Form eines Drahtes, tangiert dabei den kleineren Laserbrennfleckbereich oder ist im Wesentlichen auf den kleineren Laserbrennfleckbereich gerichtet. So wird sichergestellt, dass das aufgeschmolzene Zusatzmaterial beim Tiefschweißen die Dampfkappilare im Schmelzbad umströmt. Hierdurch werden eine bessere Vermischung des Zusatzmaterials mit dem im Fügestoß, d. h. Stumpfstoß oder Überlappstoß aufgeschmolzenen Stahlblechmaterials und damit eine homogenere Schweißnaht erzielt.

Eine weitere vorteilhafte Ausgestaltung des erfindungsgemäßen Verfahrens ist dadurch gekennzeichnet, dass das Zusatzmaterial, vorzugsweise in Form eines Drahtes, schleppend zugeführt wird. Eine schleppende Zusatzmaterialzuführung, insbesondere Drahtzuführung, bedeutet, dass das Zusatzmaterial in Schweißrichtung gesehen dem Schmelzbad vorlaufend bzw. dem kleineren Laserbrennfleckbereich von vorne zugeführt wird. Auch durch diese Ausgestaltung werden eine bessere Vermischung des Zusatzmaterials mit dem im Fügestoß, d. h. Stumpfstoß oder Überlappstoß aufgeschmolzenen Stahlblechmaterials und damit eine homogenere Schweißnaht erzielt.

Eine weitere vorteilhafte Ausgestaltung des erfindungsgemäßen Verfahrens ist dadurch gekennzeichnet, dass das in Form eines Drahtes zugeführte Zusatzmaterial dem Schmelzbad derart zugeführt wird, dass die Mittelachse des Drahtes mit der Oberfläche des mindestens einen zu verschweißenden Stahlblechs bzw. der miteinander zu verschweißenden Stahlbleche einen spitzen Winkel von kleiner 50°, bevorzugt kleiner 45°, besonders bevorzugt kleiner 30°, insbesondere zwischen 10° und 30° einschließt. Hierdurch lässt sich eine optimale Zuführung des Zusatzmaterials in den Tiefschweißbereich, insbesondere in Richtung der Dampfkappilare erzielen.

Nach einer weiteren vorteilhaften Ausgestaltung wird das Zusatzmaterial, vorzugsweise in Form eines Drahtes, vor dem Zuführen (Einfließen) in das Schmelzbad mittels einer Heizvorrichtung auf eine Temperatur von mindestens 60°C, vorzugsweise auf mindestens 100°C, vorzugsweise auf mindestens 150°C, insbesondere auf mindestens 180° erhitzt. Hierdurch ist im Vergleich zur Verwendung eines nicht erhitzten Zusatzdrahtes eine deutlich höhere Schweißgeschwindigkeit möglich. Denn die Spitze des erhitzten Zusatzdrahtes lässt sich mit dem Laserstrahl schneller schmelzen. Darüber hinaus wird der Schweißprozess durch das Erhitzen des Zusatzdrahtes vor dem Zuführen in die Schweißschmelze stabiler. Die Obergrenze der Temperatur des vorerhitzten Drahtes liegt unterhalb der Temperatur, bei welcher der Draht seine Formstabilität verliert oder diese für eine zuverlässige Drahtzuführung zu gering ist. Die Obergrenze der Drahtvorerhitzung liegt beispielsweise im Bereich von ca. 250°C bis 300°C.

Vorzugsweise wird ein Mangan-Bor-Stahl als presshärtbarer Stahl verwendet. In einer bevorzugten Ausgestaltung des erfindungsgemäßen Verfahrens wird das zu verschweißende Stahlblech oder mindestens eines der miteinander zu verschweißenden Stahlbleche so ausgewählt, dass es einen presshärtbaren Stahl folgender Zusammensetzung aufweist: 0,10 bis 0,50 Gew.-% C, max. 0,40 Gew.-% Si, 0,50 bis 2,0 Gew.-% Mn, max. 0,025 Gew.-% P, max. 0,010 Gew.-% S, max. 0,60 Gew.-% Cr, max. 0,50 Gew.-% Mo, max. 0,050 Gew.-% Ti, 0,0008 bis 0,0070 Gew.-% B, und min. 0,010 Gew.-% Al, Rest Fe und unvermeidbare Verunreinigungen. Die aus einem solchen Stahlblech gefertigten Bauteile weisen nach dem Presshärten eine hohe Festigkeit auf. Bleche aus unterschiedlichen oder identischen Mangan-Bor-Stählen können mit dem erfindungsgemäßen Verfahren miteinander verschweißt werden, um maßgeschneiderte, durch Presshärten maximierte Festigkeiten aufweisende Blechhalbzeuge bereitzustellen.

Das erfindungsgemäße Verfahren kann nicht nur beim Aneinanderfügen mehrerer Stahlplatinen gleicher oder unterschiedlicher Blechdicke im Stumpfstoß zum Einsatz kommen, von denen mindestens eine Platine aus presshärtbarem Stahl hergestellt und mit einer Aluminium enthaltenden Beschichtung versehen ist, sondern auch beim Laserstrahlschweißen eines einzelnen platten- oder bandförmigen Stahlblechs aus presshärtbarem Stahl, vorzugsweise Mangan-Bor-Stahl, das eine Aluminium enthaltende Beschichtung aufweist, wobei im letztgenannten Fall die miteinander zu verschweißenden Blechkanten durch Umformen, beispielsweise durch Abkanten oder Rollformen, aufeinander zu bewegt werden, so dass sie schließlich einander zugewandt im Stumpfstoß angeordnet sind.

Des Weiteren kann das erfindungsgemäße Verfahren auch beim Laserstrahlschweißen eines oder mehrerer Stahlbleche aus presshärtbarem Stahl, vorzugsweise Mangan-Bor-Stahl, im Überlappstoß angewendet werden.

Eine weitere vorteilhafte Ausgestaltung des erfindungsgemäßen Verfahrens ist dadurch gekennzeichnet, dass das oder die Stahlbleche im Stumpfstoß gefügt wird/werden, wobei an dem zu fügenden Stumpfstoß ein möglichst geringer Spalt, vorzugsweise quasi ein "technischer Nullspalt", mit einer durchschnittlichen Spaltbreite im Bereich von 0,01 bis 0,15 mm, vorzugsweise im Bereich von 0,06 bis 0,15 mmeingestellt wird.

Eine weitere bevorzugte Ausgestaltung des erfindungsgemäßen Verfahrens sieht vor, dass das oder die Stahlbleche mit einer Schweißgeschwindigkeit von mindestens 4 m/min, vorzugsweise von mindestens 5 m/min, besonders bevorzugt mit einer Schweißgeschwindigkeit im Bereich von 6 bis 12 m/min gefügt wird/werden.

Zur Erzielung einer möglichst homogenen, einwandfrei härtbaren Schweißnaht sowie einer sehr guten Schweißnahtgeometrie ist es vorteilhaft, wenn nach einer weiteren bevorzugten Ausgestaltung des erfindungsgemäßen Verfahrens das Zusatzmaterial in Form eines Drahtes zugeführt wird, wobei die Drahtzufuhr mit einer Zufuhrgeschwindigkeit im Bereich von 40 % bis 90 % der Schweißgeschwindigkeit erfolgt.

Eine weitere Ausgestaltung der Erfindung sieht vor, dass das Schmelzbad während des Laserschweißens zumindest an seiner dem Laserstrahl abgewandten Seite mit Schutzgas beaufschlagt wird. Das Schutzgas schützt die Schweißschmelze vor Oxidation, die eine Schwächung der Schweißnaht zur Folge hätte. Bei dem Schutzgas kann es sich beispielsweise um reines Argon, COz, Helium, Stickstoff oder ein Mischgas aus Argon, Helium, Stickstoff und/oder COz handeln.

Eine weitere vorteilhafte Ausgestaltung der Erfindung sieht vor, dass das Schmelzbad während des Laserschweißens zumindest an seiner dem Laserstrahl zugewandten Seite nicht mit einem Schutzgasstrom beaufschlagt wird. Versuche seitens der Erfinder haben gezeigt, dass sich hierdurch das Auftreten von Schweißspritzern deutlich reduzieren lässt.

Nachfolgend wird die Erfindung anhand einer Ausführungsbeispiele darstellenden Zeichnung näher erläutert. Es zeigen schematisch:

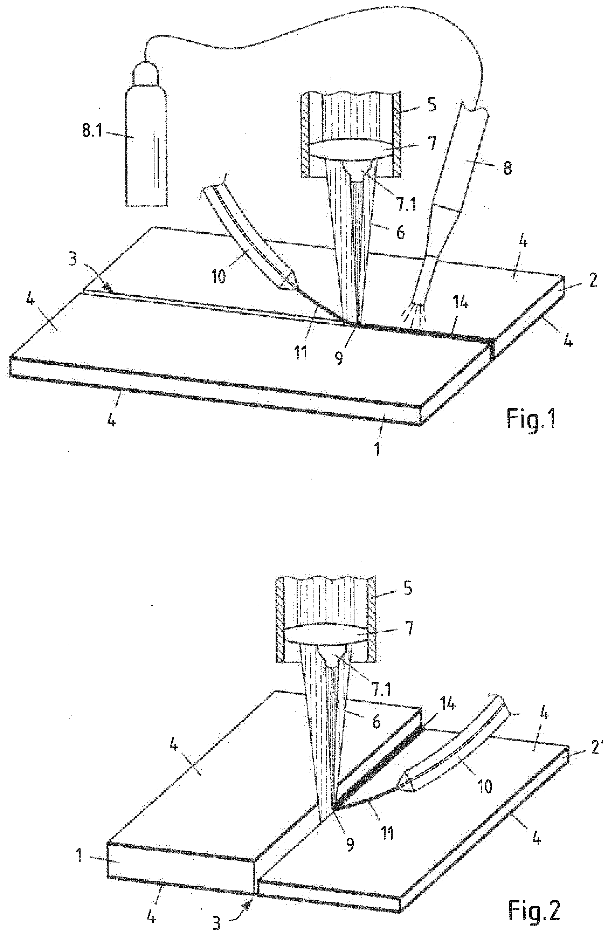

- Fig. 1: eine perspektivische Ansicht von Teilen einer Vorrichtung zur Durchführung des erfindungsgemäßen Schmelzschweißverfahrens, wobei mittels eines Laserstrahls zwei im Wesentlichen gleich dicke, presshärtbare Stahlbleche im Stumpfstoß unter Verwendung von Zusatzdraht miteinander verschweißt werden;
- Fig. 2: eine perspektivische Ansicht von Teilen einer Vorrichtung zur Durchführung des erfindungsgemäßen Schmelzschweißverfahrens, wobei mittels eines Laserstrahls zwei im Wesentlichen unterschiedlich dicke, presshärtbare Stahlbleche im Stumpfstoß unter Verwendung von Zusatzdraht miteinander verschweißt werden;

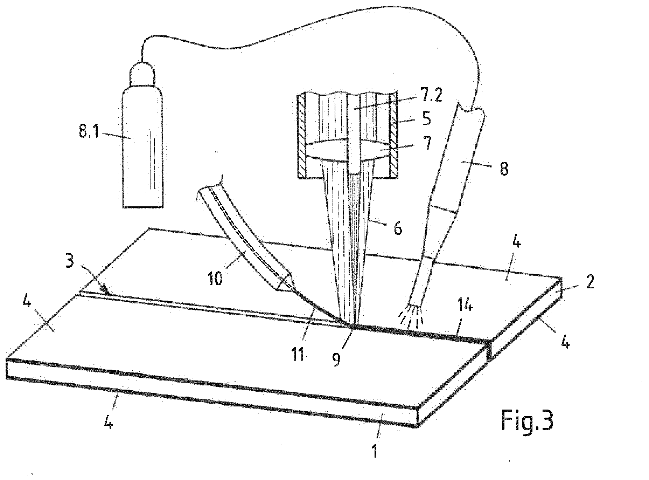

- Fig. 3: eine perspektivische Ansicht von Teilen einer weiteren Vorrichtung zur Durchführung des erfindungsgemäßen Schmelzschweißverfahrens, wobei mittels eines Laserstrahls zwei im Wesentlichen gleich dicke, presshärtbare Stahlbleche im Stumpfstoß unter Verwendung von Zusatzdraht miteinander verschweißt werden;

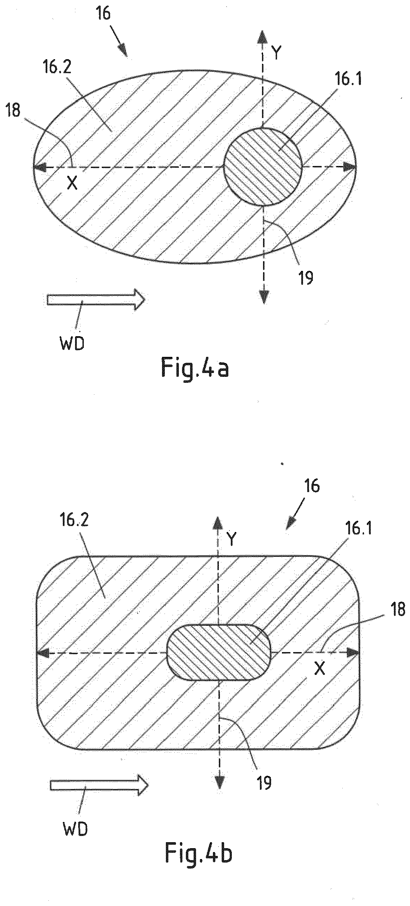

- Fig. 4a: eine Draufsicht auf einen bei Durchführung des erfindungsgemäßen Verfahrens erzeugten Laserbrennfleck; und
- Fig. 4b: eine Draufsicht auf einen weiteren bei Durchführung des erfindungsgemäßen Verfahrens erzeugten Laserbrennfleck.

In den Figuren 1 bis 3 sind Laserstrahlschweißvorrichtungen zur Durchführung des erfindungsgemäßen Verfahrens skizziert. Die jeweilige Vorrichtung umfasst eine Unterlage (nicht gezeigt), auf der zwei Bänder oder Platinen 1, 2 aus Stahl gleicher oder unterschiedlicher Werkstoffgüte derart angeordnet sind, dass ihre miteinander zu verschweißenden Kanten als Stumpfstoß aneinander liegen. Zumindest eines der Stahlbleche 1, 2 ist aus presshärtbarem Stahl, vorzugsweise Mangan-Bor-Stahl hergestellt. Die Stahlbleche 1, 2 werden mit einem möglichst geringen Spalt 3 von wenigen Zehntelmillimetern im Stumpfstoß gefügt. Die Breite (Weite) des Spaltes 3 beträgt beispielsweise weniger als 0,2 mm, vorzugsweise weniger als 0,15 mm. Sofern die Stahlbleche 1, 2 aus Stahl unterschiedlicher Werkstoffgüte hergestellt sind, so besitzt das eine Stahlblech 1 oder 2 beispielsweise eine relativ weiche Tiefziehgüte, während das andere Stahlblech 2 bzw. 1 aus höherfestem Stahl besteht.

Der presshärtbare Stahl, aus dem zumindest eines der miteinander zu verbindenden Stahlbleche 1, 2 besteht, kann beispielsweise folgende chemische Zusammensetzung aufweisen:
0,10 bis 0,50 Gew.-% C,
max. 0,40 Gew.-% Si,
0,50 bis 2,0 Gew.-% Mn,
max. 0,025 Gew.-% P,
max. 0,010 Gew.-% S,
max. 0,60 Gew.-% Cr,
max. 0,50 Gew.-% Mo,
max. 0,050 Gew.-% Ti,
0,0008 bis 0,0070 Gew.-% B, und
min. 0,010 Gew.-% Al,
Rest Fe und unvermeidbare Verunreinigungen.

Im Anlieferungszustand, d.h. vor einer Wärmebehandlung und schnellen Abkühlung, besitzt das presshärtbare Stahlblech 1 bzw. 2 eine Streckgrenze Re von vorzugsweise mindestens 300 MPa; seine Zugfestigkeit Rm beträgt z.B. mindestens 480 MPa, und seine Bruchdehnung Aso liegt vorzugsweise bei mindestens 10 %. Nach dem Warmumformen (Presshärten), d.h. einem Erhitzen auf Austenitisierungstemperatur von ca. 900°C bis 950°C, Umformen bei dieser Temperatur und anschließendem schnellen Abkühlen, weist das pressgehärtete Stahlblech eine Streckgrenze Re von ca. 1.100 MPa, eine Zugfestigkeit Rm von ca. 1.500 MPa bis 2.000 MPa und eine Bruchdehnung Aso von ca. 5 % auf.

Die Stahlbleche 1, 2 sind mit einer metallischen Beschichtung 4 aus Aluminium versehen. Es handelt sich beispielsweise um eine Al-Si-Beschichtung. Die Beschichtung 4 ist auf den Grundwerkstoff vorzugsweise beidseitig aufgebracht, beispielsweiseweise durch Schmelztauchbeschichten, indem ein Band aus presshärtbarem Stahl, vorzugsweise Mangan-Bor-Stahl durch ein Al-Si-Schmelzbad geleitet, überschüssiges Beschichtungsmaterial vom Band abgeblasen und das beschichtete Band anschließend nachbehandelt, insbesondere erhitzt wird. Der Aluminiumgehalt der Beschichtung 4 kann im Bereich von 70 Gew.-% bis 90 Gew.-% liegen.

Alternativ kann auch nur eines der zu verschweißenden Stahlbleche 1, 2 eine aluminiumhaltige Beschichtung 4 aufweisen. Ferner kann die Beschichtung 4 gegebenenfalls nur auf einer Seite des oder der Stahlbleche 1, 2 appliziert sein, z.B. mittels physikalischer Gasphasenabscheidung (PVD) oder mittels eines elektrolytischen Beschichtungsprozesses.

Die Stahlbleche 1, 2 können, wie in den Figuren 1 und 3 gezeigt, im Wesentlichen gleich dick sein. Die Blechdicke liegt beispielsweise im Bereich von 0,8 bis 3,0 mm, vorzugsweise im Bereich von 1,8 mm bis 3,0 mm, während die Dicke der metallischen Oberflächenbeschichtung 4 auf der jeweiligen Blechseite weniger als 100 µm, insbesondere weniger als 50 µm betragen kann.

Oberhalb der Stahlbleche 1, 2 ist ein Abschnitt eines Laserschweißkopfes 5 skizziert, der mit einer Optik zur Formung und Ausrichtung eines Laserstrahls 6, insbesondere einer Fokussierlinse 7 versehen ist. Der Laserstrahl 6 wird zum Beispiel mittels einer Nd:YAG-Laseranlage erzeugt, die eine Leistung im Bereich von 5 kW bis 10 kW liefert.

Dem Laserschweißkopf 5 kann optional eine Leitung 8 zur Zuführung von Schutzgas zugeordnet sein. Die Mündung der Schutzgasleitung 8 ist bzw. wird beispielsweise im Wesentlichen auf den frisch erzeugten Abschnitt der Schweißnaht 14 gerichtet, und zwar derart, dass das Schweißbad 9 selbst durch den Schutzgasstrom nicht oder zumindest nicht direkt beaufschlagt wird. Mit 8.1 ist ein als Schutzgasquelle dienender Druckgastank bezeichnet. Als Schutzgas wird vorzugsweise reines Argon oder beispielsweise ein Gemisch aus Argon, Helium und/oder Kohlendioxid verwendet. Eine alternative oder weitere (nicht gezeigte) Ausgestaltung des Schmelzschweißverfahrens sieht vor, dass die Unterseite bzw. die dem Laserstrahl 6 abgewandte Seite des Schmelzbades 9 sowie die Unterseite der Schweißnaht 14 mit Schutzgas beaufschlagt werden.

Des Weiteren ist dem Laserschweißkopf 5 eine Führungsleitung 10 zugeordnet, mittels der dem Schmelzbad 9 Zusatzmaterial (Schweißzusatz) 11 zum Beispiel in Form eines Drahtes zugeführt wird, wobei die Spitze des Drahtes 11 im Schmelzbad 9 abschmilzt. Der Schweißzusatz 11 enthält im Wesentlichen kein Aluminium. Er weist beispielsweise folgende chemische Zusammensetzung auf:
0,05 bis 0,4 Gew.-% C,
0 bis 2,0 Gew.-% Si,
0 bis 3,0 Gew.-% Mn,
4 bis 25 Gew.-% Cr,
0 bis 0,5 Gew.-% Mo, und
5 bis 12 Gew.-% Ni,
Rest Fe und unvermeidbare Verunreinigungen.

Anstelle eines drahtförmigen Schweißzusatzes (Zusatzdrahtes) 11 kann dem Schmelzbad 9 auch ein pulverförmiger Schweißzusatz in Form eines Gas-Pulverstroms zugeführt werden. Der pulverförmige Schweißzusatz kann dabei die gleiche chemische Zusammensetzung wie der oben beschriebene Zusatzdraht 11 aufweisen. Als Trägergas zur Zuführung des pulverförmigen Schweißzusatzes in das Schmelzbad 9 wird vorzugsweise eines der oben genannten Schutzgase verwendet.

Erfindungsgemäß weist der Laserschweißkopf 5 ein oder mehrere optische Elemente auf, mittels dem/denen ein einzelner Laserbrennfleck 16 mit unterschiedlicher Energieverteilung an dem Schmelzbad 9 derart erzeugt wird, dass der Laserbrennfleck 16 einen kleineren Laserbrennfleckbereich 16.1 und einen größeren Laserbrennfleckbereich 16.2 aufweist (siehe auch Figuren 4a und 4b). Der größere Laserbrennfleckbereich 16.2 bestrahlt dabei eine Fläche, die mindestens das 2-fache, vorzugsweise mindestens das 3-fache einer von dem kleineren Laserbrennfleckbereich 16.1 bestrahlten Fläche beträgt, wobei in dem kleineren Laserbrennfleckbereich 16.1 eine höhere Laserenergieleistung pro Flächeneinheit als in dem größeren Laserbrennfleckbereich 16.2 eingebracht wird. Der kleinere Laserbrennfleckbereich 16.1 und der größere Laserbrennfleckbereich 16.2 können dabei unterschiedliche Energieniveaus aufweisen, die unabhängig voneinander sind. Zum Beispiel kann sowohl in dem kleineren Laserbrennfleckbereich 16.1 als auch in dem größeren Laserbrennfleckbereich 16.2 eine Laserenergieleistung im Bereich von 4 kW bis 5 kW herrschen, wobei sich diese Energie bzw. Leistung in dem größeren Laserbrennfleckbereich 16.2 allerdings über eine deutlich größere Fläche verteilt. Der kleinere Laserbrennfleckbereich 16.1 dient im Wesentlichen der Tiefenschweißung, während der größere Laserbrennfleckbereich 16.2 den Schweißprozess unterstützt.

Der größere Laserbrennfleckbereich 16.2 hat eine längliche Form, beispielsweise eine ovale, elliptische oder rechteckige Form. Seine Längsachse verläuft im Wesentlichen in der jeweiligen Schweißrichtung WD, d. h. im Wesentlichen parallel dazu. Der kleinere Laserbrennfleckbereich 16.1 kann eine im Wesentlichen kreisrunde Form oder ebenfalls eine längliche Form aufweisen (siehe Figuren 4a und 4b).

Bei dem oder den optischen Elementen des Laserschweißkopfes 5, mittels dem/denen der eine unterschiedliche Energieverteilung aufweisende Laserbrennfleck erzeugt wird, kann es sich beispielsweise um ein der Fokussierlinse 7 zugeordnetes diffraktorisches oder refraktorisches Optikelement und/oder eine kleinere zusätzliche Fokussierlinse 7.1 handeln (siehe Fig. 1 und 2).

Eine andere Möglichkeit zur Erzeugung eines einzelnen Laserbrennflecks 16 mit unterschiedlicher Energieverteilung ist in Fig. 3 skizziert. Der dort schematisch dargestellte Laserschweißkopf 5 weist eine Fokussierlinse 7 mit einem derselben zugeordneten Lichtleiter oder Lichtfaserbündel 7.2 auf.

Vorzugsweise sind die optischen Elemente 7, 7.1 bzw. 7, 7.2 des Laserschweißkopfes 5 derart ausgeführt, dass die Position des kleineren Laserbrennfleckbereichs 16.1 innerhalb des größeren Laserbrennfleckbereichs 16.2, relativ zu letzterem einstellbar ist. Beispielsweise kann die Position des kleineren Laserbrennfleckbereichs 16.1 innerhalb des größeren Laserbrennfleckbereichs 16.2 in einer parallel und/oder quer zur Schweißrichtung WD verlaufenden Richtung (X-Richtung und/oder Y-Richtung) eingestellt werden. Diese Einstellmöglichkeit ist in den Figuren 4a und 4b durch gestrichelte Doppelpfeile 18, 19 schematisch angedeutet. Beispielsweise ist die kleinere Fokussierlinse 7.1, das mindestens eine diffraktorische oder refraktorische Optikelement oder der Lichtleiter 7.2 in dem Laserschweißkopf 5 radial verstellbar zu der Fokussierlinse 7 gelagert.

Wenn die unterschiedliche Energieverteilung im Laserbrennfleck mittels einer Fokussierlinse 7 und einem der Fokussierlinse zugeordneten Lichtleiter oder Lichtfaserbündel 7.2 verwirklicht wird, kann beispielsweise durch eine Defokussierung des Laserstrahls 6 die Position der Laserbrennfleckbereiche 16.1 und 16.2 relativ zueinander variiert werden.

Des Weiteren lässt sich Fig. 4a sowie Fig. 4b entnehmen, dass der größere Laserbrennfleckbereich 16.2 eine Längserstreckung aufweist, die mindestens das 2-fache, vorzugsweise mindestens das 2,5-fache, besonders bevorzugt mindestens das 3-fache des mittleren Durchmessers oder größten Durchmessers des kleineren Laserbrennfleckbereichs 16.1 beträgt.

Das in Fig. 2 skizzierte Ausführungsbeispiel unterscheidet sich von den in den Figuren 1 und 3 gezeigten Beispielen dadurch, dass die Stahlbleche 1, 2' verschieden dick sind, so dass an dem Stumpfstoß ein Dickensprung d vorliegt. Beispielsweise besitzt das eine Stahlblech 2' eine Blechdicke im Bereich von 0,8 mm bis 1,2 mm, während das andere Stahlblech 1 eine Blechdicke im Bereich von 1,6 mm bis 3,0 mm aufweist. Darüber hinaus können sich die im Stumpfstoß miteinander zu verbindenden Stahlbleche 1, 2' auch in ihrer Werkstoffgüte voneinander unterscheiden. Beispielsweise ist die dickere Platine 1 aus höherfestem Stahl hergestellt, wohingegen die dünnere Stahlplatine 2' eine relativ weiche Tiefziehgüte besitzt. Die Stahlbleche 1, 2' werden ebenfalls mit einem möglichst geringen Spalt 3 von wenigen Zehntelmillimetern aneinandergefügt.

Bei dem in Fig. 2 skizzierten Ausführungsbeispiel wird das Schmelzbad 9 während des Laserschweißens an seiner dem Laserstrahl 6 zugewandten Seite nicht mit einem Schutzgasstrom beaufschlagt. Die dem Laserstrahl 6 abgewandte Seite des Schmelzbades 9 sowie die dem Laserstrahl 6 abgewandte Seite der Schweißnaht 14 werden jedoch vorzugsweise mit Schutzgas beaufschlagt.

Die beschriebene spezielle bzw. angepasste Energieverteilung in dem einzelnen Laserbrennfleck 16 hat den Effekt, dass sich die Temperaturverteilung und somit die Strömungen im Schmelzbad 9 verändern. Es kommt somit zu einer besseren Homogenisierung der Schweißnaht 14. Dabei sind Schweißgeschwindigkeiten von 5 m/min und mehr der Homogenität der Schweißnaht 14 zuträglich. Die Zufuhr des Zusatzdrahtes 11 erfolgt vorzugsweise mit einer Geschwindigkeit von 40 % bis 90 % der Schweißgeschwindigkeit.

Der Zusatzdraht 11 wird in das Schmelzbad 9 vorzugsweise in der Weise zugeführt, dass der Draht 11 den kleineren Laserbrennfleckbereich 16.2 tangiert oder im Wesentlichen unmittelbar auf den kleineren Laserbrennfleckbereich 16.2 gerichtet ist. Außerdem erfolgt die Drahtzuführung vorzugsweise schleppend (vgl. Fig. 1 und Fig. 3).

Des Weiteren ist in den Figuren 1 bis 3 zu erkennen, dass der Zusatzdraht 11 dem Schmelzbad 9 derart zugeführt wird, dass die Mittelachse des Drahtes 11 mit der Oberfläche des mindestens einen zu verschweißenden Stahlblechs 1, 2 bzw. der miteinander zu verschweißenden Stahlbleche 1, 2 einen spitzen Winkel einschließt, der beispielsweise in einem Bereich von 10° bis 45°, vorzugsweise im Bereich zwischen 10° und 30° liegt.

## Patentansprüche

1. Verfahren zum Schmelzschweißen eines oder mehrerer Stahlbleche aus presshärtbarem Stahl, vorzugsweise Mangan-Bor-Stahl, wobei das oder mindestens eines der Stahlbleche (1, 2) eine metallische Beschichtung (4) aufweist, die Aluminium enthält, und wobei das Schmelzschweißen unter Zuführung von Zusatzmaterial in das ausschließlich mittels mindestens eines Laserstrahls (6) erzeugte Schmelzbad (9) erfolgt, **dadurch gekennzeichnet, dass** mittels eines oder mehrerer optischer Elemente ein einzelner Laserbrennfleck (16) mit unterschiedlicher Energieverteilung an dem Schmelzbad (9) derart erzeugt wird, dass der Laserbrennfleck einen kleineren Laserbrennfleckbereich (16.1) und einen größeren Laserbrennfleckbereich (16.2) aufweist, wobei der größere Laserbrennfleckbereich (16.2) eine Fläche bestrahlt, die mindestens das 2-fache, vorzugsweise mindestens das 3-fache einer von dem kleineren Laserbrennfleckbereich (16.1) bestrahlten Fläche beträgt, und wobei in dem kleineren Laserbrennfleckbereich (16.1) eine höhere Laserenergieleistung pro Flächeneinheit als in dem größeren Laserbrennfleckbereich (16.2) eingebracht wird.

2. Verfahren nach Anspruch 1, **dadurch gekennzeichnet, dass** der Laserstrahl (6) bei dem Schmelzschweißen im Wesentlichen oszillationsfrei betrieben wird.

3. Verfahren nach Anspruch 1 oder 2, **dadurch gekennzeichnet, dass** das oder die optischen Elemente (7.1, 7.2), mittels dem/denen der eine unterschiedliche Energieverteilung aufweisende Laserbrennfleck (16) erzeugt wird, derart ausgeführt ist/sind, dass die Position des kleineren Laserbrennfleckbereichs (16.1) innerhalb des größeren Laserbrennfleckbereichs (16.2), relativ zu letzterem einstellbar ist.

4. Verfahren nach Anspruch 3, **dadurch gekennzeichnet, dass** die Position des kleineren Laserbrennfleckbereichs (16.1) innerhalb des größeren Laserbrennfleckbereichs (16.2) in einer parallel und/oder quer zur Schweißrichtung (WD) verlaufenden Richtung (X, Y) eingestellt wird.

5. Verfahren nach einem der Ansprüche 1 bis 4, **dadurch gekennzeichnet, dass** der größere Laserbrennfleckbereich (16.2) eine längliche Form, insbesondere eine ovale, elliptische oder rechteckige Form aufweist, wobei eine Längsachse des größeren Laserbrennfleckbereichs (16.2) im Wesentlichen in der Schweißrichtung (WD) verläuft.

6. Verfahren nach einem der Ansprüche 1 bis 5, **dadurch gekennzeichnet, dass** der größere Laserbrennfleckbereich (16.2) eine Längserstreckung aufweist, die mindestens das 2-fache, vorzugsweise mindestens das 2,5-fache, besonders bevorzugt mindestens das 3-fache des mittleren Durchmessers oder größten Durchmessers des kleineren Laserbrennfleckbereichs (16.1) beträgt.

7. Verfahren nach einem der Ansprüche 1 bis 6, **dadurch gekennzeichnet, dass** das Zusatzmaterial (11) in Form eines Drahtes oder Pulvers zugeführt wird.

8. Verfahren nach einem der Ansprüche 1 bis 7, **dadurch gekennzeichnet, dass** das Zusatzmaterial (11) bis auf unvermeidbare Verunreinigungen oder unvermeidbare Spurenanteile kein Aluminium enthält.

9. Verfahren nach einem der Ansprüche 1 bis 8, **dadurch gekennzeichnet, dass** das Zusatzmaterial (11) mindestens ein Legierungselement aus einer Nickel, Chrom und/oder Kohlenstoff umfassenden Gruppe enthält.

10. Verfahren nach einem der Ansprüche 1 bis 9, **dadurch gekennzeichnet, dass** das Zusatzmaterial (11) folgende Zusammensetzung aufweist:
0,05 - 0,4 Gew.-% C,
0 - 2,0 Gew.-% Si,
0 - 3,0 Gew.-% Mn,
4 - 25 Gew.-% Cr,
0 - 0,5 Gew.-% Mo, und
5 - 12 Gew.-% Ni,
Rest Fe und unvermeidbare Verunreinigungen.

11. Verfahren nach einem der Ansprüche 1 bis 10, **dadurch gekennzeichnet, dass** der presshärtbare Stahl folgende Zusammensetzung aufweist:
0,10 - 0,50 Gew.-% C,
max. 0,40 Gew.-% Si,
0,50 - 2,0 Gew.-% Mn,
max. 0,025 Gew.-% P,
max. 0,010 Gew.-% S,
max. 0,60 Gew.-% Cr,
max. 0,50 Gew.-% Mo,
max. 0,050 Gew.-% Ti,
0,0008 - 0,0070 Gew.-% B, und
min. 0,010 Gew.-% Al,
Rest Fe und unvermeidbare Verunreinigungen.

12. Verfahren nach einem der Ansprüche 1 bis 11, **dadurch gekennzeichnet, dass** das oder die Stahlbleche (1, 2) im Stumpfstoß gefügt wird/werden, wobei an dem zu fügenden Stumpfstoß vorzugsweise ein Spalt (3) mit einer durchschnittlichen Spaltbreite im Bereich von 0,01 bis 0,15 mm, vorzugsweise im Bereich von 0,06 bis 0,15 mm eingestellt wird.

13. Verfahren nach einem der Ansprüche 1 bis 12, **dadurch gekennzeichnet, dass** das oder die Stahlbleche (1, 2) mit einer Schweißgeschwindigkeit von mindestens 4 m/min, vorzugsweise von mindestens 5 m/min, besonders bevorzugt mit einer Schweißgeschwindigkeit im Bereich von 6 bis 12 m/min gefügt wird/werden.

14. Verfahren nach einem der Ansprüche 1 bis 13, **dadurch gekennzeichnet, dass** das Zusatzmaterial (11) in Form eines Drahtes zugeführt wird, wobei die Drahtzufuhr mit einer Zufuhrgeschwindigkeit im Bereich von 40 % bis 90 % der Schweißgeschwindigkeit erfolgt.

15. Verfahren nach einem der Ansprüche 1 bis 14, **dadurch gekennzeichnet, dass** das Schmelzbad (9) während des Laserschweißens zumindest an seiner dem Laserstrahl (6) zugewandten Seite nicht mit einem Schutzgasstrom beaufschlagt wird.

16. Verfahren nach einem der Ansprüche 1 bis 15, **dadurch gekennzeichnet, dass** das Zusatzmaterial (11), vorzugsweise in Form eines Drahtes, derart in das Schmelzbad (9) zugeführt wird, dass das Zusatzmaterial (11) unmittelbar in den kleineren Laserbrennfleckbereich (16.2) zugeführt wird.

17. Verfahren nach einem der Ansprüche 1 bis 16, **dadurch gekennzeichnet, dass** das Zusatzmaterial (11), vorzugsweise in Form eines Drahtes, schleppend zugeführt wird.

18. Verfahren nach einem der Ansprüche 1 bis 17, **dadurch gekennzeichnet, dass** das in Form eines Drahtes zugeführte Zusatzmaterial (11) dem Schmelzbad (9) derart zugeführt wird, dass die Mittelachse des Drahtes mit der Oberfläche des mindestens einen zu verschweißenden Stahlblechs (1, 2) bzw. der miteinander zu verschweißenden Stahlbleche (1, 2) einen spitzen Winkel von kleiner 50°, bevorzugt kleiner 45°, besonders bevorzugt kleiner 30°, insbesondere zwischen 10° und 30° einschließt.

19. Verfahren nach einem der Ansprüche 1 bis 18, **dadurch gekennzeichnet, dass** das Zusatzmaterial (11), vorzugsweise in Form eines Drahtes, vor dem Zuführen in das Schmelzbad (9) mittels einer Heizvorrichtung auf eine Temperatur von mindestens 60°C, vorzugsweise auf mindestens 100°C, vorzugsweise auf mindestens 150°C, insbesondere auf mindestens 180° erhitzt wird.

## Claims

1. Method for fusion welding one or more steel sheets of press-hardenable steel, preferably manganese-boron steel, wherein the or at least one of the steel sheets (1, 2) has a metallic coating (4) which contains aluminum, and wherein the fusion welding is carried out while filler material is being fed into the molten bath (9) produced exclusively by means of at least one laser beam (6), **characterized in that** by means of one or more optical elements a single laser focal spot (16) with different energy distribution is generated at the molten bath (9) in such a way that the laser focal spot comprises a smaller laser focal spot area (16.1) and a larger laser focal spot region (16.2), wherein the larger laser focal spot region (16.2) irradiates an area which is at least 2 times, preferably at least 3 times, an area irradiated by the smaller laser focal spot region (16.1), and wherein a higher laser energy output per unit area is introduced into the smaller laser focal spot region (16.1) than into the larger laser focal spot region (16.2).

2. Method according to claim 1, **characterized in that** the laser beam (6) is operated essentially without oscillation during the fusion welding.

3. Method according to claim 1 or 2, **characterized in that** the optical element or elements (7.1, 7.2) by means of which the laser focal spot (16) having a different energy distribution is/are generated is/are designed in such a way that the position of the smaller laser focal spot region (16.1) within the larger laser focal spot region (16.2), relative to the latter, is adjustable.

4. Method according to claim 3, **characterized in that** the position of the smaller laser focal spot area (16.1) within the larger laser focal spot area (16.2) is adjusted in a direction (X, Y) running parallel and/or transverse to the welding direction (WD).

5. Method according to any one of claims 1 to 4, **characterized in that** the larger laser focal spot area (16.2) has an elongated shape, in particular an oval, elliptical or rectangular shape, a longitudinal axis of the larger laser focal spot area (16.2) running essentially in the welding direction (WD).

6. Method according to any one of claims 1 to 5, **characterized in that** the larger laser focal spot region (16.2) has a longitudinal extent which is at least 2 times, preferably at least 2.5 times, particularly preferably at least 3 times, the mean diameter or largest diameter of the smaller laser focal spot region (16.1).

7. Method according to any one of claims 1 to 6, **characterized in that** the filler material (11) is supplied in the form of a wire or powder.

8. Method according to any one of claims 1 to 7, **characterized in that** the filler material (11) does not contain aluminum except for unavoidable impurities or unavoidable trace amounts.

9. Method according to any one of claims 1 to 8, **characterized in that** the filler material (11) contains at least one alloying element from a group comprising nickel, chromium and/or carbon.

10. Method according to any one of claims 1 to 9, **characterized in that** the filler material (11) has the following composition:
0.05 - 0.4 wt.% C,
0 - 2.0 wt.% Si,
0 - 3.0 wt.% Mn,
4 - 25 wt.% Cr,
0 - 0.5 wt.% Mo, and
5 - 12 wt.% Ni,
balance Fe and unavoidable impurities.

11. Method according to any one of claims 1 to 10, **characterized in that** the press-hardenable steel has the following composition:
0.10 - 0.50 wt.% C,
max. 0.40 wt.% Si,
0.50 - 2.0 wt.% Mn,
max. 0.025 wt.% P,
max. 0.010 wt.% S,
max. 0.60 wt.% Cr,
max. 0.50 wt.% Mo,
max. 0.050 wt.% Ti,
0.0008 - 0.0070 wt.% B, and
min. 0.010 wt.% Al,
balance Fe and unavoidable impurities.

12. Method according to any one of claims 1 to 11, **characterized in that** the steel sheet(s) (1, 2) is/are joined in the butt joint, wherein a gap (3) with an average gap width in the range of 0.01 to 0.15 mm, preferably in the range of 0.06 to 0.15 mm, is preferably set at the butt joint to be joined.

13. Method according to any one of claims 1 to 12, **characterized in that** the steel sheet(s) (1, 2) is/are joined at a welding speed of at least 4 m/min, preferably at least 5 m/min, particularly preferably at a welding speed in the range from 6 to 12 m/min.

14. Method according to any one of claims 1 to 13, **characterized in that** the filler material (11) is supplied in the form of a wire, the wire supply taking place at a supply speed in the range from 40% to 90% of the welding speed.

15. Method according to any one of claims 1 to 14, **characterized in that** the molten bath (9) is not subjected to a protective gas flow during laser welding, at least on its side facing the laser beam (6).

16. Method according to any one of claims 1 to 15, **characterized in that** the filler material (11), preferably in the form of a wire, is fed into the molten bath (9) in such a way that the filler material (11) is fed directly into the smaller laser focal spot region (16.2).

17. Method according to any one of claims 1 to 16, **characterized in that** the filler material (11), preferably in the form of a wire, is fed in a dragging manner.

18. Method according to any one of claims 1 to 17, **characterized in that** the filler material (11) supplied in the form of a wire is supplied to the molten bath (9) in such a way that the central axis of the wire encloses an acute angle of less than 50°, preferably less than 45°, particularly preferably less than 30°, in particular between 10° and 30°, with the surface of the at least one steel sheet (1, 2) to be welded or of the steel sheets (1, 2) to be welded to one another.

19. Method according to any one of claims 1 to 18, **characterized in that** the filler material (11), preferably in the form of a wire, is heated by means of a heating device to a temperature of at least 60°C, preferably to at least 100°C, preferably to at least 150°C, in particular to at least 180°, before being fed into the molten bath (9).

## Revendications

1. Procédé de soudage par fusion d'une ou de plusieurs tôles d'acier en acier durcissable à la presse, de préférence en acier au manganèse et au bore, dans lequel la ou au moins l'une des tôles d'acier (1, 2) présente une enduction métallique (4), qui contient de l'aluminium, et dans lequel le soudage par fusion se fait en introduisant un matériau additionnel dans le bain de fusion (9) produit exclusivement au moyen d'au moins un faisceau laser (6), **caractérisé en ce qu'**un seul point focal laser (16) ayant une répartition d'énergie différente est produit sur le bain de fusion (9) au moyen d'un ou de plusieurs éléments optiques d'une manière telle que le point focal laser présente une zone de point focal laser plus petite (16.1) et une zone de point focal laser plus grande (16.2), dans lequel la zone de point focal laser plus grande (16.2) irradie une surface qui est au moins 2 fois, de préférence au moins 3 fois une surface irradiée par la zone de point focal laser plus petite (16.1), et dans lequel dans la zone de point focal laser plus petite (16.1) est mis en place un rendement énergétique laser par unité de surface plus élevé que dans la zone de point focal laser plus grande (16.2).

2. Procédé selon la revendication 1, **caractérisé en ce que** le faisceau laser (6) est actionné essentiellement sans oscillation lors du soudage par fusion.

3. Procédé selon la revendication 1 ou 2, **caractérisé en ce que** le ou les éléments optiques (7.1, 7.2) au moyen duquel/desquels est produit le point focal laser (16) présentant une répartition d'énergie différente, est/sont réalisé(s) d'une manière telle que la position de la zone de point focal laser plus petite (16.1) à l'intérieur de la zone de point focal laser plus grande (16.2) peut être réglée par rapport à cette dernière.

4. Procédé selon la revendication 3, **caractérisé en ce que** la position de la zone de point focal laser plus petite (16.1) à l'intérieur de la zone de point focal laser plus grande (16.2) est réglée dans un sens (X, Y) passant parallèlement et/ou transversalement au sens de soudage (WD).

5. Procédé selon l'une des revendications 1 à 4, **caractérisé en ce que** la zone de point focal laser plus grande (16.2) présente une forme oblongue, plus particulièrement une forme ovale, elliptique ou rectangulaire, dans lequel un axe longitudinal de la zone de point focal laser plus grande (16.2) passe essentiellement dans le sens de soudage (WD).

6. Procédé selon l'une des revendications 1 à 5, **caractérisé en ce que** la zone de point focal laser plus grande (16.2) présente une extension longitudinale, qui est au moins 2 fois, de préférence au moins 2,5 fois, de préférence encore au moins 3 fois le diamètre moyen ou le diamètre maximum de la plus petite zone de point focal laser (16.1).

7. Procédé selon l'une des revendications 1 à 6, **caractérisé en ce que** le matériau additionnel (11) est introduit sous forme d'un fil métallique ou d'une poudre.

8. Procédé selon l'une des revendications 1 à 7, **caractérisé en ce que** le matériau additionnel (11) ne contient pas d'aluminium à l'exception d'impuretés inévitables ou de taux de traces inévitables.

9. Procédé selon l'une des revendications 1 à 8, **caractérisé en ce que** le matériau additionnel (11) contient au moins un élément d'alliage d'un groupe comprenant du nickel, du chrome et/ou du carbone.

10. Procédé selon l'une des revendications 1 à 9, **caractérisé en ce que** le matériau additionnel (11) présente la composition suivante :
0,05 à 0,4 pour cent en poids de C,
0 à 2,0 pour cent en poids de Si,
0 à 3,0 pour cent en poids de Mn,
4 à 25 pour cent en poids de Cr,
0 à 0,5 pour cent en poids de Mo, et
5 à 12 pour cent en poids de Ni,
le reste étant du Fe et des impuretés inévitables.

11. Procédé selon l'une des revendications 1 à 10, **caractérisé en ce que** l'acier durcissable à la presse présente la composition suivante :
0,10 à 0,50 pour cent en poids de C,
au maximum 0,40 pour cent en poids de Si,
0,50 à 2,0 pour cent en poids de Mn,
au maximum 0,025 pour cent en poids de P,
au maximum 0,010 pour cent en poids de S,
au maximum 0,60 pour cent en poids de Cr,
au maximum 0,50 pour cent en poids de Mo,
au maximum 0,050 pour cent en poids de Ti,
0,0008 à 0,0070 pour cent en poids de B, et
au minimum 0,010 pour cent en poids de Al
le reste étant du Fe et des impuretés inévitables.

12. Procédé selon l'une des revendications 1 à 11, **caractérisé en ce que** la ou les tôles d'acier (1, 2) est/sont jointe(s) bout à bout, dans lequel une fente (3) avec une largeur moyenne de fente de l'ordre de 0,01 à 0,15 mm, de préférence, de l'ordre de 0,06 à 0,15 mm est réglée sur l'assemblage bout à bout à joindre.

13. Procédé selon l'une des revendications 1 à 12, **caractérisé en ce que** la ou les tôles d'acier (1, 2) est/sont jointe(s) à une vitesse de soudage d'au moins 4 m/minute, de préférence d'au moins 5 m/minute, de préférence encore à une vitesse de soudure de l'ordre de 6 à 12 m/minute.

14. Procédé selon l'une des revendications 1 à 13, **caractérisé en ce que** le matériau additionnel (11) est introduit sous forme d'un fil métallique, dans lequel l'introduction du fil métallique se fait à une vitesse d'introduction de l'ordre de 40 % à 90 % de la vitesse de soudage.

15. Procédé selon l'une des revendications 1 à 14, **caractérisé en ce qu'**un flux de gaz inerte n'est pas appliqué au bain de fusion (9) pendant le soudage laser au moins sur son côté orienté vers le faisceau laser (6).

16. Procédé selon l'une des revendications 1 à 15, **caractérisé en ce que** le matériau additionnel (11), est introduit, de préférence sous forme d'un fil métallique, d'une manière telle dans le bain de fusion (9) que le matériau additionnel (11) est introduit directement dans la zone de point focal laser plus petite (16.2).

17. Procédé selon l'une des revendications 1 à 16, **caractérisé en ce que** le matériau additionnel (11) est introduit par traction, de préférence sous forme d'un fil métallique.

18. Procédé selon l'une des revendications 1 à 17, **caractérisé en ce que** le matériau additionnel (11) introduit sous forme d'un fil métallique est introduit dans le bain de fusion (9) d'une manière telle que l'axe médian du fil métallique forme, avec la surface de la au moins une tôle d'acier à souder (1, 2) ou des tôles d'acier (1, 2) à souder entre elles, un angle aigu inférieur à 50°, de préférence inférieur à 45°, de préférence encore inférieur à 30°, plus particulièrement entre 10° et 30°.

19. Procédé selon l'une des revendications 1 à 18, **caractérisé en ce que** le matériau additionnel (11), de préférence sous forme d'un fil métallique, est chauffé avant l'introduction dans le bain de fusion (9) au moyen d'un dispositif de chauffage à une température d'au moins 60° C, de préférence d'au moins 100° C, de préférence à au moins 150° C, plus particulièrement à au moins 180°.
